# EUROPEAN PATENT APPLICATION

(11) **EP 2 367 038 A1**
(43) Date of publication of application: **21.09.2011**
(21) Application number: 11158334.0
(22) Date of filing: 15.03.2011
(51) Int. Cl.: G02B 7/04, G02B 7/10, G03B 3/10, F03G 7/06

(54) **Drive module and electronic apparatus**

(30) Priority: 15.03.2010 JP 2010058439
(71) Applicant: Seiko Instruments Inc., Chiba-shi, Chiba (JP)
(72) Inventor: Nobe, Tetsuya, Chiba-shi, Chiba (JP); Kotanagi, Susumu, Chiba-shi, Chiba (JP)
(74) Representative: Cloughley, Peter Andrew

(57) **Abstract**

A drive module and an electronic apparatus which can detect inclination of a driven member with high degree of accuracy are provided. A module lower panel and an intermediate member are formed with a plurality of notched portions which expose the inner peripheral portion of a lower leaf spring when viewing a drive unit from below.

## Description

The present invention relates to a drive module and an electronic apparatus suitable for, for example, driving an optical system to adjust a focus position or for being used as an actuator for driving a movable member.

In the related art, in a compact electronic apparatus such as a cellular phone with camera function or the like, various drive modules configured to drive auto focusing and zooming functions using expansion and contraction of a shape memory alloy wire are proposed.

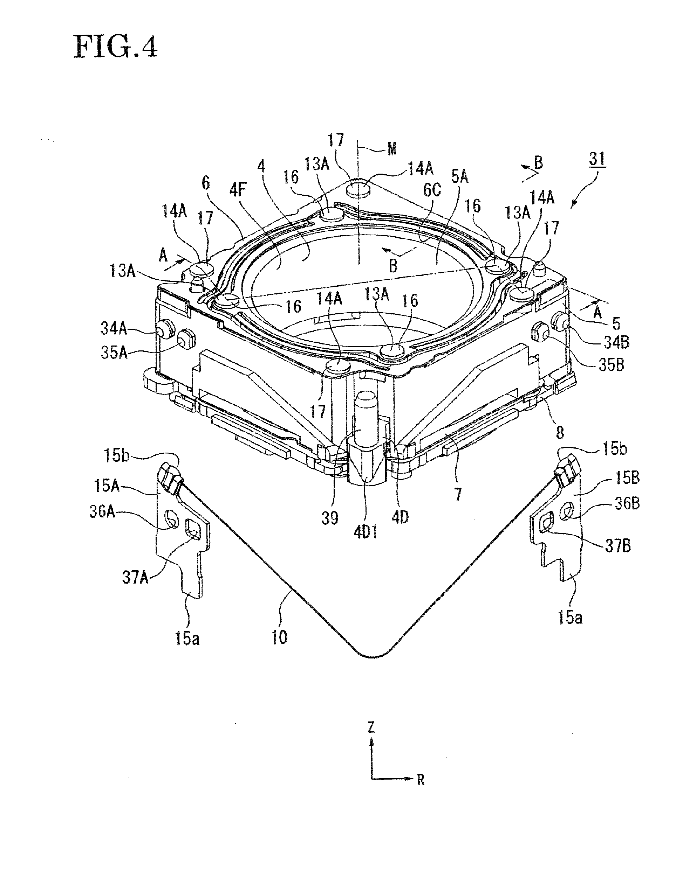

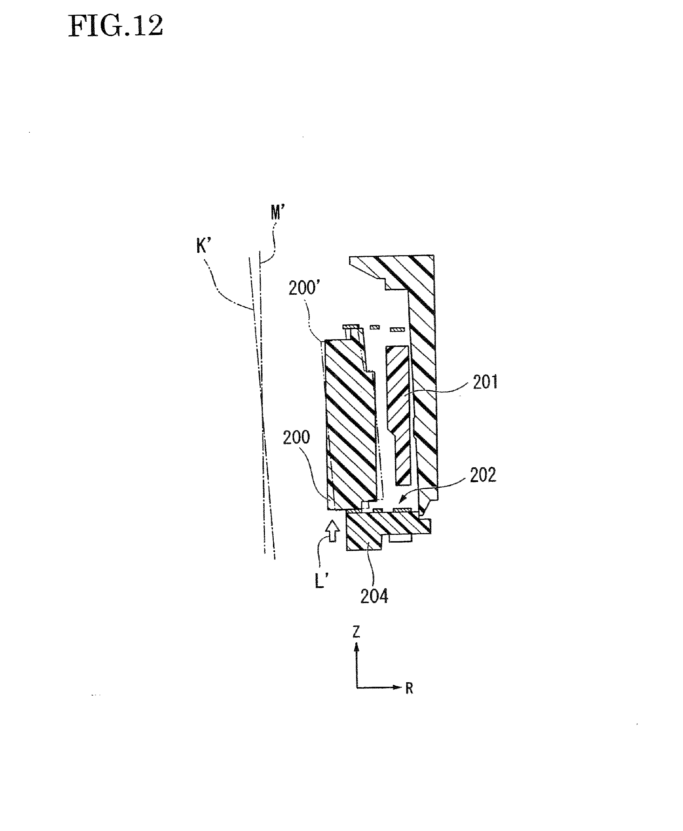

Fig. 12 is an explanatory drawing of a drive module in the related art, and is a cross-sectional view taken along a portion corresponding to the line B-B in Fig. 4.

As shown in Fig. 12, the drive module in the related art includes a cylindrical lens frame (driven member) 200 configured to hold a lens unit (not shown), a cylindrical module frame (supporting member) 201 configured to store the lens frame 200 inside thereof, and a lower leaf spring 202 configured to be connected to an end surface of the lens frame 200 and the module frame 201 in the -Z direction for resiliently holding the lens frame 200 so as to be movable with respect to the module frame 201 in the Z direction. The drive module includes a driving unit (not shown) configured to move the lens frame 200 in the Z direction. The drive module further includes a module lower panel 204 (restricting member) configured to restrict the movement of the lens frame 200 and the lower leaf spring 202 in the -Z direction. In general, the lower leaf spring 202 is formed of metallic material, and the lens frame 200 and the module lower panel 204 are formed of resin material.

In the drive module described above, an optical axis K' of the lens frame 200 (lens unit) may be installed obliquely with respect to an axial line M' of the module frame 201 or the module lower panel 204 (reference numeral 200' in Fig. 12), a problem such that picked-up images are out of focus on one side, that is, so-called a "one-side blur" may occur. In order to prevent such an event, inclination of the lens frame 200 is measured, and whether or not the measured inclination is within a standard is inspected in a stage of manufacturing the drive module or in a stage after the lens unit is assembled to the drive module.

As a method of measuring the inclination of the lens frame 200, there is a method of irradiating an object of measurement with laser light emitted from a light source after having collimated by a collimator lens and receiving reflected light reflected regularly from the object of measurement by a light-receiving element, and detecting inclination of the object of measurement on the basis of an image forming position on the light-receiving element (for example, see JP-A-2001-133232).

There is also a method of causing outgoing light from a lens to couple on an image pickup element and detecting an angle of inclination of an optical axis of a lens from intensity or distribution of an image formed on the image pickup element (for example, see JP-A-6-243478, JP-A-2001-359126).

Here, in order to measure the inclination of the drive module (lens frame 200) using the method in JP-A-2001-133232, irradiation of an exposed portion of the lens frame 200 (for example, inner peripheral edge portion) from a module lower panel 204 with laser light L' is conceivable. However, since the lens frame 200 is formed of the resin material in black or the like as described above, a reflection power for reflecting the laser light L' is low. Therefore, there arises a problem that the light intensity of the reflected light that the light-receiving element can receive comes short and hence low accuracy of measurement is resulted.

In contrast, there is another conceivable method such as assembling an artificial lens (not shown) having a high reflecting power for measuring the inclination in the lens frame 200, and detecting the inclination on the basis of the reflected light from the artificial lens. However, in this method, mounting and demounting operations of the artificial lens with respect to the lens frame 200 is necessary, and shavings generated from the lens frame 200 or the artificial lens at the time of mounting and demounting operation may adhere to the inner surface of the lens frame 200. If a subsequent assembling operation is performed in this state, the shavings may attach to the lens unit or the like after the assembly, so that deterioration of quality of shot images shown by a camera of an electronic apparatus, or impairment of smooth operation of the drive module may be resulted.

In contrast, in the methods in JP-A-6-243478 and JP-A-2001-359126, the angle of inclination of the optical axis of the lens is detected after having assembled the lens unit. Therefore, in the case of a defective product in which the angle of inclination of the optical axis of the lens is out of the standard, an operation to remove the lens unit is necessary, so that the production efficiency is lowered. When the defective product is discarded as an entire lens unit, there arises a problem of increased cost of defective products.

In addition, the inclination measured using the artificial lens or the lens unit described above includes the inclination of the artificial lens or the lens unit in itself with respect to the lens frame 200. Therefore, it is difficult to determine whether the cause of the inclination is the inclination of the artificial lens or the lens unit, or the inclination of the lens frame 200. Therefore, there is a problem that the reliability of the measurement is low.

In view of such problems as described above, it is an object of the invention to provide a drive module and an electronic apparatus which allows highly accurate detection of an inclination of a driven member.

In order to solve the above-described problems, the invention provides the following means.

According to an aspect of the invention, there is provided a drive module including a driven member movable in a first direction, a cylindrical supporting member configured to store the driven member inside thereof, a connecting member connected to end surfaces of the driven member and the supporting member in the first direction, and a restricting member arranged on the opposite side of the driven member with respect to the connecting member, and configured to restrict the movement of the driven member in a direction opposite from the first direction, wherein the restricting member is formed with a hole portion exposing the driven member or the connecting member when viewing the restricting member in the first direction.

In this configuration, when measuring the inclination of the driven member using, for example, the laser displacement gauge of trigonometrical survey system, the exposed surfaces of the driven member or the connecting member from the hole portion can be used as a measuring surface for measuring the position of the driven member (connecting member). In this case, since the inclination of the driven member can be detected with high degree of accuracy on the basis of the position of the driven member (connecting member), non-defective products and defective products can be determined accurately. Therefore, a high-quality drive module with less possibility of one-side blur can be provided.

In addition, since the inclination can be measured without loading or unloading an artificial lens to the driven member as in the case of the method of measuring the inclination using the regular reflection of the laser light described above, generation of the shavings can be restrained. Furthermore, since whether or not a lens unit is defective can be determined in an early stage before assembly to the driven member, lowering of the production efficiency can be restrained. Furthermore, since the defective product does not have to be discarded as an entire lens unit, the cost of defective products can be reduced. Furthermore, the measured inclination does not include the inclination of the artificial lens or the lens unit in itself, measurement of the inclination with higher degree of accuracy is achieved.

Preferably, the three or more hole portions are formed on the restricting member.

In this configuration, when measuring the positions of the respective exposed surfaces, the inclination of the entire surface of the connecting member can be measured on the basis of the positions of the respective exposed surfaces. Therefore, measurement of the inclination with higher degree of accuracy is achieved.

Preferably, a projecting portion projecting outward from an outer wall surface of the driven member and a shape memory alloy wire fixed at both end portions to the supporting member and engaged at a midsection with the projecting portion and configured to move the driven member along the first direction by being expanded or contracted due to heat generation when energized are provided, and the hole portion is arranged on a line of intersection between a plane including the projecting portion and the first direction and the restricting member.

In the structure configured to drive the driven member with the single shape memory alloy wire as in the configuration in the invention, the structure is simple and the control is also simple. However, the driven member is supported in a cantilevered state. In this case, the inclination is generally liable to be increased between a suspending side (the side of the projecting portion) and the opposite side thereof although it depends on the elastic coefficient of the shape memory alloy wire.

Therefore, a maximum value of the inclination of the connecting member (driven member) can be detected by forming the hole portion on the line of intersection between the plane including the projecting portion and the first direction and the restricting member. Accordingly, whether or not the inclination of the connecting member (driven member) falls within the standard can be determined accurately, and hence a higher quality product can be provided.

Preferably, the restricting member is formed with a center hole penetrating along the first direction, and the hole portion is formed by notching part of a periphery of the center hole.

For example, when measuring the position or the like of the driven member or the connecting member using, for example, the laser displacement gauge of trigonometrical survey system, the reflected light diffused and reflected from the exposed surfaces may be blocked by a peripheral wall which surround the hole portion.

In contrast, according to the configuration using the notched part, the light intensity of the reflected light which can be received by the laser displacement gauge by allowing the reflected light reflected from the exposed surfaces to pass the opened portion of the hole portion is increased, the measurement of inclination of the driven member is achieved with higher degree of accuracy.

According to another aspect of the invention, an electronic apparatus includes the drive module in the invention.

In this configuration, since the high-quality drive module with less inclination of the driven member is provided, an electronic apparatus having a high-quality function can be provided.

According to the drive module of the invention, since the inclination of the driven member can be detected with high degree of accuracy, the non-defective products and the defective products can be determined accurately. Therefore, a high-quality drive module with less possibility of one-side blur can be provided.

Also, according to the electronic apparatus in the invention, since the high-quality drive module is provided, the electronic apparatus having a high-quality function can be provided.

Embodiments of the present invention will now be described by way of further example only and with reference to the accompanying drawings, in which:
Fig. 1 is an appearance perspective view of a drive module;
Fig. 2 is an exploded perspective view showing a schematic configuration of the drive module;
Fig. 3 is an exploded perspective view showing a schematic configuration of a drive unit;
Fig. 4 is an appearance perspective view of the drive unit;
Fig. 5 is a cross-sectional view taken along the line A-A in Fig. 4;
Fig. 6 is a perspective view of an upper leaf spring (lower leaf spring).
Fig. 7 is a perspective view of a module lower panel and an intermediate member;
Fig. 8 is a plan view of a state in which the intermediate member and the module lower panel placed one on top of another;
Fig. 9 is a plan view of the drive unit viewed from below;
Fig. 10 is a perspective view of the drive unit viewed from below;
Figs. 11A to 11C are explanatory drawing of a cellular phone with camera; and
Fig. 12 is a cross-sectional view showing a drive unit in the related art.

### (Drive Module)

Referring now to the drawings, an embodiment of a drive module according to the invention will be described.

In this embodiment, the drive module of an image-pickup lens unit in a camera will be described as an example. As an example of an actuator which drives a lens unit, a case where a shape memory alloy wire is used will be described as an example. In the following drawings, the axial direction of the lens unit may be referred to as "Z direction" and the radial direction may be referred to as "R direction".

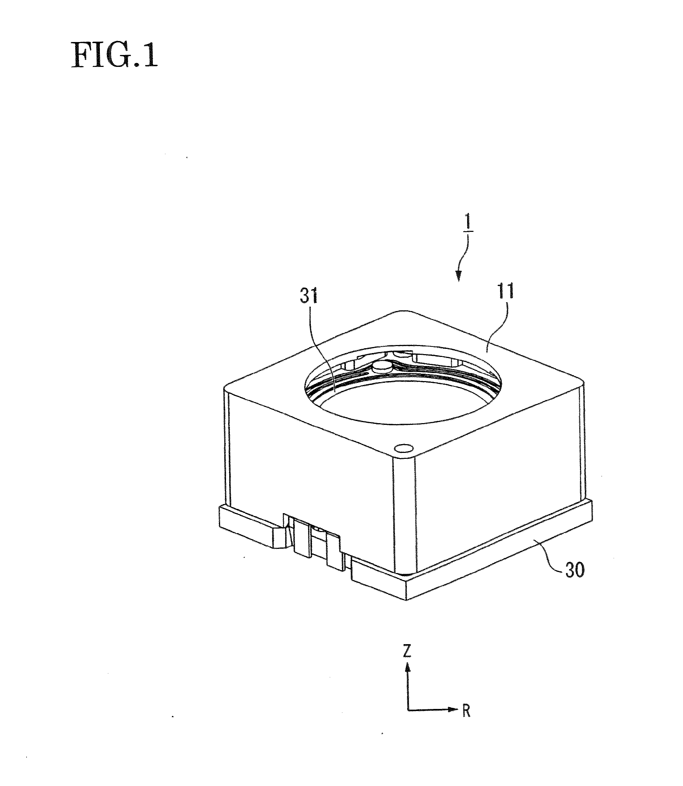

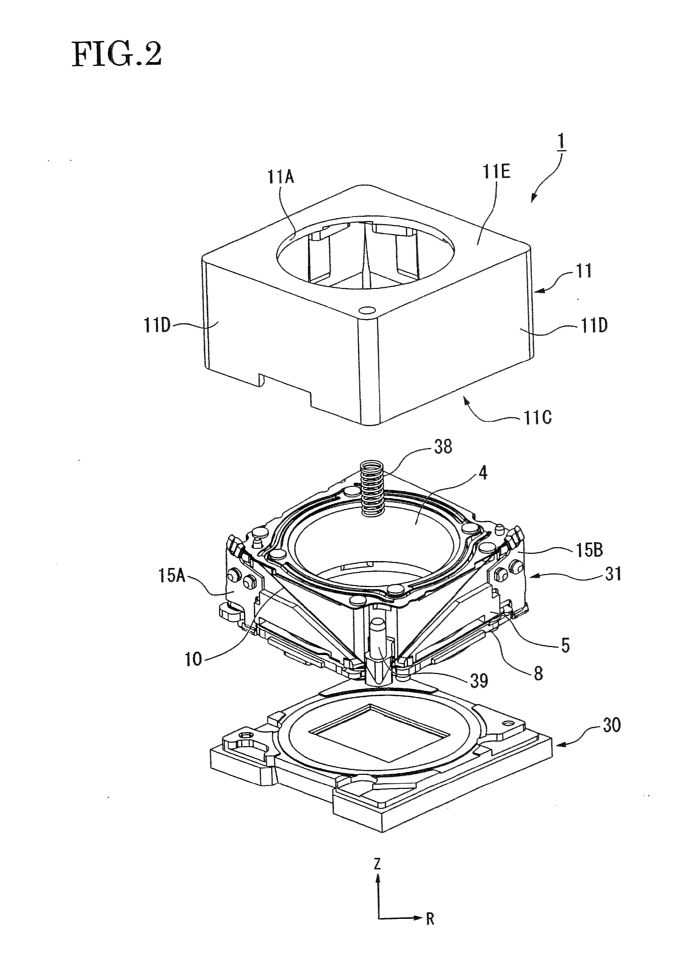

Fig. 1 is an appearance perspective view of a drive module 1. Fig. 2 is an exploded perspective view showing a schematic configuration of the drive module 1. As shown in Fig. 1 and Fig. 2, the drive module 1 in this embodiment is configured into a box shape as a whole.

The drive module 1 is a member to be fixed onto a substrate which supplies control signals or a power to the drive module 1 and then mounted on an electronic apparatus after having been assembled, and includes an adapter 30 to be fixed onto the substrate, a drive unit 31 to be disposed on the adapter 30, and a cover 11 disposed so as to cover the drive unit 31.

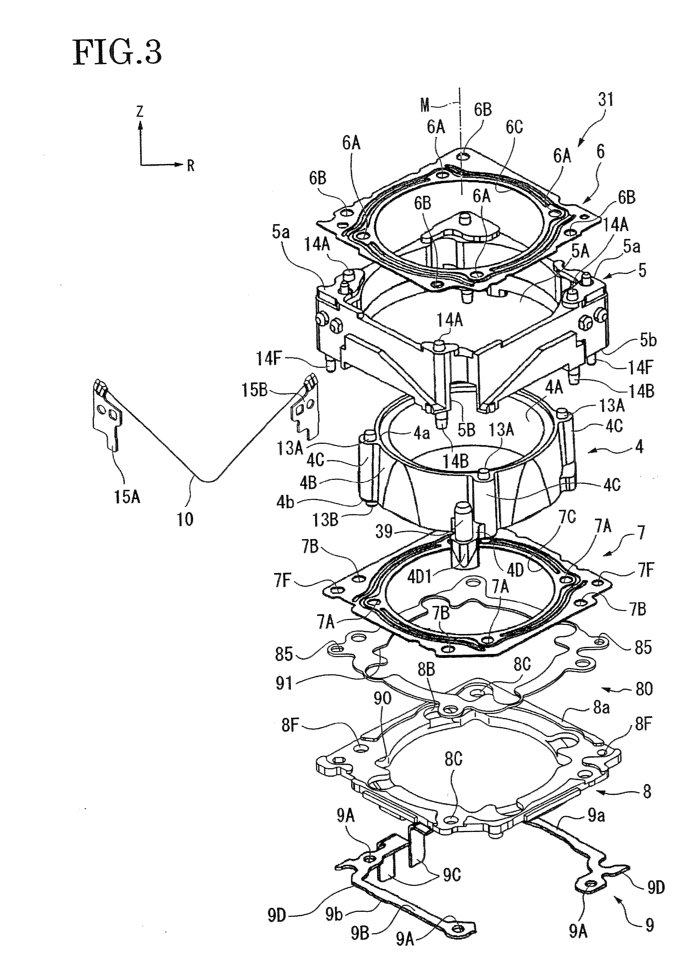

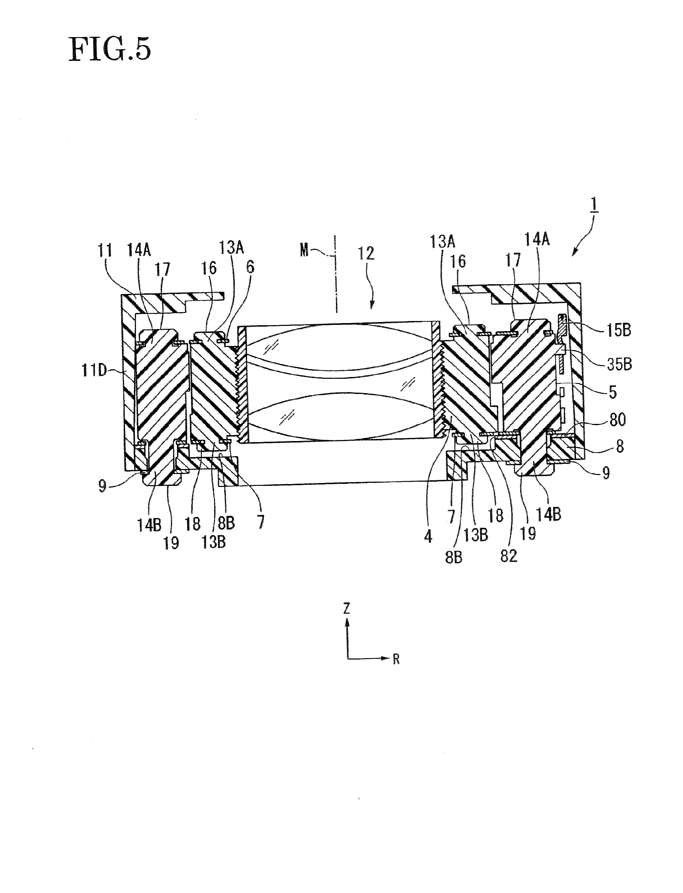

The cover 11 is a member having a side wall portion 11 D extending downward from an outer edge portion of an upper surface 11E so as to be capable of fitting on a module frame 5 from the outside, and a rectangular-shaped opening 11C formed on the lower side thereof. The cover 11 includes a circular opening 11A about an axial line M (see Fig. 3) formed at a center of the upper surface 11E. The dimensions of the opening 11A are set to allow loading and unloading of a lens unit 12 (see Fig. 5).

Fig. 3 is an exploded perspective view showing a schematic configuration of the drive unit 31. Fig. 4 is an appearance perspective view of the drive unit 31. Fig. 5 is a cross-sectional view taken along the line A-A in Fig. 4. For easy interpretation, part of components is omitted as needed in some drawings.

The drive unit 31 includes a cylindrical lens frame (driven member) 4 holding a lens unit, the cylindrical module frame (supporting member) 5 configured to store the lens frame 4 inside thereof, and an upper leaf spring 6 connected to end surfaces of the lens frame 4 and the module frame 5 in +Z direction and a lower leaf spring (connecting member) 7 connected to end surfaces of the lens frame 4 and the module frame 5 in -Z direction in order to resiliently hold the lens frame 4 with respect to the module frame 5 so as to be movable in the Z direction.

Returning back to Fig. 2, the drive unit 31 includes a drive unit configured to move the lens frame 4 in Z direction. The drive unit 31 includes a coil spring 38 configured to urge the lens frame 4 in the -Z direction and actuators configured to move the lens frame 4 in the +Z direction against an urging force of the coil spring 38 as drive units. The drive unit 31 includes a shape memory alloy (hereinafter, referred to as SMA) wire 10, wire holding members 15A and 15B configured to fix the SMA wire 10 to the module frame 5, and a power feeding member 9 (see Fig. 3) configured to feed power to the SMA wire 10 via the wire holding members 15A and 15B as the actuators. Terminal portions 9C of the power feeding member 9 are hidden on the back side of the drive unit 31 in Fig. 2 and Fig. 4.

The drive module 1 further includes a module lower panel 8 (restricting member) configured to restrict the movement of the lens frame 4 and the lower leaf spring 7 in the -Z direction.

As shown in Fig. 3 to Fig. 5, the lens frame 4 is inserted inward of the module frame 5 in an assembled state. The upper leaf spring 6 and the lower leaf spring 7 are disposed on and under the lens frame 4 and the module frame 5, and are fixed by caulking in a state of holding the lens frame 4 and the module frame 5 from above and below. The module lower panel 8 and the power feeding member 9 are layered under the lower leaf spring 7 in this order from below, and are fixed by caulking respectively from below the module frame 5. The cover 11 which covers these layered members from above is fixed to the module lower panel 8.

The reference sign M in the drawing is the axial line of the drive module 1 which matches the optical axis of the lens unit 12, and indicates a driving direction of the lens frame 4. In the following description, when describing respective components in a disassembled state, the position and the direction may be referred to on the basis of the positional relationship with respect to the axial line M in the assembled state. For example, even when an apparent circle or cylindrical surface does not exist in the components, the direction along the axial line M may be referred to simply as "direction of the axial line" or "Z direction", the direction of diameter of the circle about the axial line M may be referred to simply as "radial direction" or "R direction", and the circumferential direction of the circle about the axial line M may be referred to simply as "circumferential direction", and these terms should be construed accordingly unless the context requires otherwise. The vertical direction indicates a vertical direction in a state in which the axial line M is arranged in the vertical direction so that a mounting surface of the drive module 1 faces vertically below unless otherwise specified.

Subsequently, respective components will be described in detail below.

### (Lens Frame)

The lens frame 4 in this embodiment is formed into a cylindrical shape as a whole as shown in Fig. 3, and includes a cylindrical storage portion 4A penetrating therethrough along the axial line M at a center thereof. An inner peripheral surface of the storage portion 4A is formed with a female screw (see Fig. 5). The lens unit 12 has a lens barrel having a male screw formed on the outer periphery thereof which is screwed into the above-described female screw, and a suitable lens or lens group held inside the lens barrel is fixed in the storage portion 4A.

An outer peripheral surface of the lens frame 4 includes projecting portions 4C projecting radially outward at an interval of substantially 90 degrees in the peripheral direction so as to extend in the direction of the axial line M. Four each of upper fixing pins 13A and lower fixing pins 13B projecting upward and downward along the axial line M respectively are provided on an upper end surface 4a and a lower end surface 4b of the lens frame 4 so as to extend from upper end portions and lower end portions of the respective projecting portions 4C. The upper fixing pins 13A hold the upper leaf spring 6, and the lower fixing pins 13B hold the lower leaf spring 7. The lens frame 4 is integrally formed of thermal plastic resin which allows thermal caulking or ultrasonic caulking such as polycarbonate (PC) or liquid crystal polymer (LCP) resin.

The positions of the upper fixing pins 13A and the lower fixing pins 13B in plan view may be different from each other. However, in this embodiment, the upper fixing pins 13A and the lower fixing pins 13B are arranged coaxially in parallel to the axial line M. Therefore, the positions of insertion of the upper fixing pins 13A and the lower fixing pins 13B on the upper leaf spring 6 and the lower leaf spring 7 are common to each other. The center positions of the upper fixing pins 13A and the lower fixing pins 13B in the radial direction may be different from each other. However, in this embodiment, the upper fixing pins 13A and the lower fixing pins 13B are arranged on the same circumference. Therefore, the center positions of the respective pins are arranged in a tetragonal lattice shape.

A guide projection (projecting portion) 4D is provided on the outer wall surface of the lens frame 4 so as to project radially outward. The guide projection 4D is provided between the adjacent projecting portions 4C. The guide projection 4D is configured to engage the SMA wire 10 at a distal end key portion 4D1 as shown in Fig. 4, and move the guide projection 4D upward (+Z direction) in a state of being lifted by the contraction of the SMA wire 10.

### (Module Frame)

The module frame 5 is a cylindrical member formed to have an outline formed into a substantially rectangular shape as a whole in plan view, and formed with a storage portion 5A which is a through hole formed coaxially with the axial line M at the center portion thereof as shown in Fig 3. The lens frame 4 is stored in the storage portion 5A.

Formed at four corners on the upper portion and the lower portion of the module frame 5 are upper end surfaces 5a and lower end surfaces 5b formed of planes orthogonal to the axial line M. Four upper fixing pins 14A are respectively formed on the four upper end surfaces 5a so as to extend upward, and four lower fixing pins 14B are respectively formed on the four lower end surfaces 5b so as to extend downward. The upper fixing pins 14A hold the upper leaf spring 6, and the lower fixing pins 14B hold the lower leaf spring 7, the module lower panel 8, and the power feeding member 9, respectively. The module frame 5 is integrally formed of thermal plastic resin which allows thermal caulking or ultrasonic caulking such as polycarbonate (PC) or liquid crystal polymer (LCP) resin in the same manner as the lens frame 4.

The positions of the upper fixing pins 14A in plan view may be different from the arrangement of the lower fixing pins 14B. However, in this embodiment, the upper fixing pins 14A and the lower fixing pins 14B are arranged coaxially in parallel with the axial line M. Therefore, the positions of insertion of the upper fixing pins 14A and the lower fixing pins 14B on the upper leaf spring 6 and the lower leaf spring 7 are common to each other. The distance between the upper end surface 5a and the lower end surface 5b is set to be the same as the distance between the upper end surface 4a and the lower end surface 4b of the lens frame 4.

The lower end surface 5b of the module frame 5 is formed with two positioning pins 14F so as to extend downward. The positioning pins 14F are configured to fit positioning holes of the lower leaf spring 7, the intermediate member 80, the module lower panel 8, and the power feeding member 9 to position these members.

A notch 5B is formed on the lower portion at one corner of the module frame 5. The groove width of the notch 5B in plan view is set to allow the guide projection 4D of the lens frame 4 to fit so as to be movable in the direction of the axial line M. The notch 5B is formed to allow the guide projection 4D of the lens frame 4 to penetrate therethrough thereby allowing the distal end key portion 4D1 of the guide projection 4D to project radially outward of the module frame 5 and positioning the lens frame 4 in the circumferential direction when the lens frame 4 is inserted and accommodated into the module frame 5 from below.

### (Driving Means)

As shown in Fig. 4, fixed on two adjacent side surfaces of the module frame 5 are wire holding members 15A and 15B. More specifically, reference pins 34 (34A, 34B) and drive fit pins 35 (35A, 35B) are formed in a line on the side surfaces of the module frame 5. The reference pins 34 are formed in a circular shape in front view. The drive fit pins 35 are formed into a substantially arcuate shape on an upper side and a lower side in front view and into a substantially linear shape on a left side and a right side.

The wire holding members 15A and 15B are formed of metallic plates or the like having conductivity. The wire holding members 15A and 15B are formed with reference holes 36 (36A, 36B) which fit on the reference pins 34 of the module frame 5, and drive fit pin holes 37 (37A, 37B) which fit on the drive fit pins 35, respectively. The reference holes 36 are formed into a circular shape in front view, and the drive fit pin holes 37 are formed into a substantially square shape.

When the reference holes 36 are fitted to the reference pins 34, the wire holding members 15A and 15B can be positioned with respect to the module frame 5 in the radial direction of the reference pin 34. When the drive fit pin holes 37 are fitted to the drive fit pins 35, upper end portions and lower end portions of the drive fit pins 35 come into point contact with upper sides and lower sides of the drive fit pin holes 37. Accordingly, the wire holding members 15A and 15B can be positioned in the circumferential direction of the reference pins 34. Therefore, the wire holding members 15A and 15B can be positioned with high degree of accuracy with respect to the module frame 5 in the respective directions. Since the left and right sides of the drive fit pins 35 are cut into the linear shape, even when the distance between the reference pins 34 and the drive fit pins 35 or the distance between the reference holes 36 and the drive fit pin holes 37 are fluctuated, the drive fit pin holes 37 can be fitted to the drive fit pins 35.

After having fitted the reference holes 36 and the drive fit pin holes 37 to the reference pins 34 and the drive fit pins 35 respectively, the head portions of the reference pins 34 and the drive fit pins 35 are subjected to thermal caulking so as to enlarge the outer dimensions of respective head portions to be larger than that of the reference holes 36 and the drive fit pin holes 37. Accordingly, the wire holding members 15A and 15B are secured to the module frame 5.

The wire holding members 15A and 15B each include a terminal portion 15a to be connected to the power feeding member 9, and a wire holding portion 15b that holds the SMA wire 10. The wire holding portions 15b hold the ends of the SMA wire 10 by caulking the metallic panels into a key shape.

The SMA wire 10 is held at both end portions by a pair of the wire holding members 15A and 15B. The SMA wire 10 is configured to drive the lens frame 4 in the direction of the axial line M against the urging force of the coil spring 38 by exerting a generating force on the guide projection 4D projecting from the lens frame 4. More specifically, the SMA wire 10 is engaged at a midsection thereof on the distal end key portion 4D1 of the guide projection 4D of the lens frame 4 projecting from the notch 5B of the module frame 5. In other words, the SMA wire 10 is fixed to the module frame 5 so that the both end portions oppose to each other with the intermediary of the axial line M via the wire holding members 15A and 15B with the midsection thereof engaged with the distal end key portion 4D1 of the guide projection 4D. The SMA wire 10 has a role to drive the lens frame 4 in the direction of the axial line M by being contracted by heat generation when being energized via the power feeding member 9, and exerting a tension generated thereby on the guide projection 4D. The coil spring 38 is supported in parallel to the axial line M by a pole portion 39 extending from the guide projection 4D upward (in the +Z direction) and being inserted therein.

### (Leaf Spring Member)

As shown in Fig. 3 and Fig. 4, the upper leaf spring 6 and the lower leaf spring 7 are layered on the upper portions and lower portions of the module frame 5 and the lens frame 4 inserted into the module frame 5. In this embodiment, the upper leaf spring 6 and the lower leaf spring 7 are panel-shaped leaf spring members punched into substantially the same shape in plan view, and are formed of a metallic panel such as stainless (SUS) steel panel.

The shape of the outline of the upper leaf spring 6 (lower leaf spring 7) is set to be a substantially rectangular shape which is similar to an upper end portion (lower end portion) of the module frame 5 in plan view. A circular opening 6C (7C) extending coaxially with the axial line M and being slightly larger than the storage portion 4A of the lens frame 4 is formed at the center of the upper leaf spring 6 (lower leaf spring 7). Accordingly, the upper leaf spring 6 (lower leaf spring 7) is formed into a ring shape as a whole.

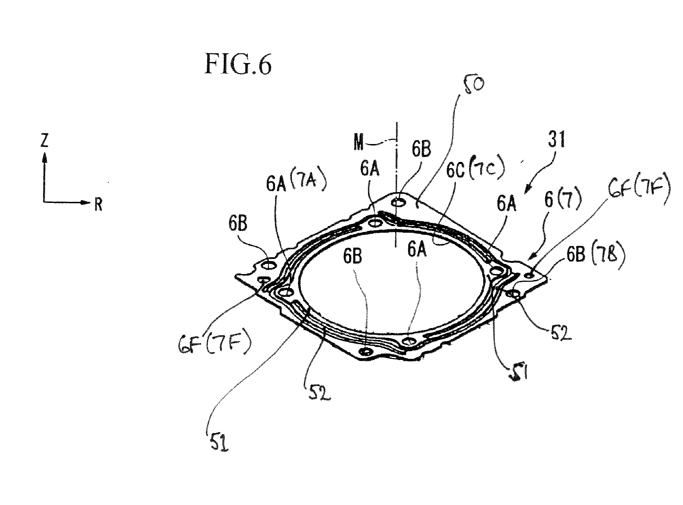

Fig. 6 is a perspective view of the upper leaf spring 6 (lower leaf spring 7).

As shown in Fig. 6, the upper leaf spring 6 (lower leaf spring 7) mainly includes a frame-shaped frame body 50 coupled to the module frame 5 on the upper end surface 5a (lower end surface 5b) thereof, a ring portion 51 coupled on the upper end surface 4a (lower end surface 4b) of the lens frame 4 in a state of being disposed radially inside the frame body 50, and a spring portion 52 connected at both ends thereof to the frame body 50 and the ring portion 51 to couple the both to each other.

Four through holes 6B (7B) which allow insertion of the respective upper fixing pins 14A (lower fixing pins 14B) therethrough are formed in the vicinity of corners of the frame body 50 corresponding to the position of arrangement of the upper fixing pins 14A (lower fixing pins 14B) formed in the vicinity of corners of the module frame 5. A pair of the positioning holes 6F (7F) to be fitted to a pair of the positioning pins 14F of the module frame 5 are formed at both end portions of one of diagonal lines of the substantially rectangular-shaped frame body 50. Accordingly, the positioning with respect to the module frame 5 in a plane orthogonal to the axial line M is achieved.

The ring portion 51 includes four protruding portions 53 protruding radially outward from an outer periphery. The respective protruding portions 53 are arranged equidistantly in the circumferential direction of the ring portion 51. Through holes 6A (7A) which allow insertion of the respective upper fixing pins 14A (lower fixing pins 14B) are formed in the respective protruding portions 53 corresponding to the position of arrangement of the upper fixing pins 13A (lower fixing pins 13B) formed in the lens frame 4.

In this manner, since the through holes 6B (7B), the positioning holes 6F (7F), and the through holes 6A (7A) are provided in the vicinity of corners having enough space therefor in the upper leaf spring 6 (lower leaf spring 7), the outer dimensions of the drive module 1 can be downsized. Since the through holes 6B (7B), the positioning holes 6F (7F), and the through holes 6A (7A) are arranged in different phases, the outer dimensions of the drive module 1 can be downsized.

The spring portion 52 is formed in a substantially quadrant arc shape, and is disposed between the ring portion 51 and the frame body 50. Then, one end of the spring portion 52 is connected to the ring portion 51 at the protruding portion 53 and the other end is connected to the frame body 50 in the vicinity of the adjacent protruding portion 53.

### (Module Lower Panel, Intermediate Member)

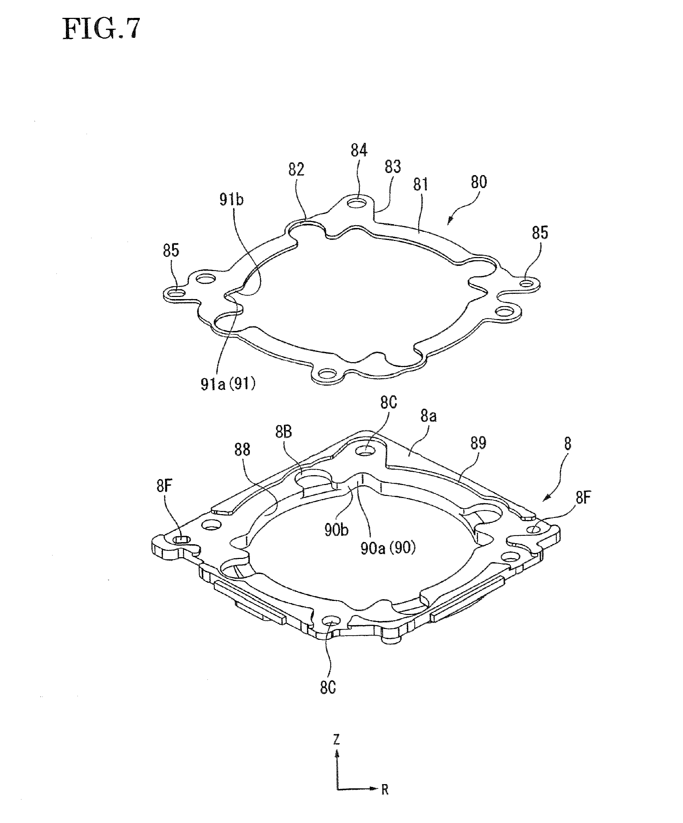

Fig. 7 is a perspective view of the module lower panel 8 and an intermediate member 80.

As shown in Fig. 7, the module lower panel 8 is formed of a resin material having electrical insulating properties and light-shielding properties. The shape of the outline of the module lower panel 8 is formed into a substantially rectangular shape in the same manner as the module frame 5. An opening (center hole) 88 having dimensions which allow loading and unloading of the lens unit 12 is provided at a center of the module lower panel 8.

The module lower panel 8 is formed with through holes 8C for allowing insertion of the lower fixing pins 14B of the module frame 5 and depressions 8B for avoiding interference with the lower fixing pins 13B of the lens frame 4 at four corners thereof. A pair of positioning holes 8F to be fitted to the pair of positioning pins 14F of the module frame 5 are formed at both end portions of one of diagonal lines of the substantially rectangular-shaped module lower panel 8.

The intermediate member 80 is formed into a flat panel ring shape, and is disposed between the lower leaf spring 7 and the module lower panel 8 as shown in Fig. 3. The thickness of the intermediate member 80 is formed to be thicker than the thickness of the lower leaf spring 7. The intermediate member 80 is formed so that the hardness of the intermediate member 80 becomes closer to the hardness of the lower leaf spring 7 than the hardness of the module lower panel 8. In this embodiment, the intermediate member 80 and the lower leaf spring 7 are both formed of a metallic material such as stainless steel in contrast to the module lower panel 8 formed of a resin material. In the embodiment, hardness of the intermediate member 80 is therefore the same as the hardness of the lower leaf spring 7, and is higher than the hardness of the module lower panel 8. The hardness of the respective members may be defined on the basis of Rockwell hardness standardized in Japan Industrial Standard (JIS) G0202.

Returning back to Fig. 7, the intermediate member 80 includes a ring portion 81 and a plurality of protruding portions 83 protruded radially outward from the outer periphery of the ring portion 81. The ring portion 81 is formed with a notched portion 82 which avoids interference of the lens frame 4 with the lower fixing pins 13B. The protruding portion 83 includes through holes 84 to allow the insertion of the lower fixing pins 14B of the module frame 5, and positioning holes 85 which allow insertion of the positioning pins 14F of the module frame 5.

As shown in Fig. 5, the lower fixing pins 14B of the module frame 5 penetrate through the lower leaf spring 7, the intermediate member 80, the module lower panel 8, and the power feeding member 9. Head portions 19 of the lower fixing pins 14B are subjected to heat caulking, so that the lower leaf spring 7, the intermediate member 80, the module lower panel 8, and the power feeding member 9 are fixed to the module frame 5. Head portions 18 of the lower fixing pins 13B of the lens frame 4 are subjected to thermal caulking after having penetrated through the lower leaf spring 7. The interference of the head portions 18 of the lower fixing pins 13B with the intermediate member 80 and the module lower panel 8 is avoided by the notched portion 82 of the intermediate member 80 and the depressions 8B of the module lower panel 8.

Returning back to Fig. 7, the intermediate member 80 is arranged inside a depressed portion 89 formed on a front surface 8a of the module lower panel 8. Accordingly, even when the intermediate member 80 is employed, upsizing of the drive module can be avoided. The depth of the depressed portion 89 is set to a depth equal to or larger than the thickness of the intermediate member 80. Accordingly, since the intermediate member 80 is arranged inside the module lower panel 8, the lower leaf spring 7, the intermediate member 80, and the module lower panel 8 can be fixed to the module frame 5 in a state in which the lower leaf spring 7 is brought into abutment with the front surface 8a of the module lower panel 8. Therefore, even when the intermediate member 80 is employed, the accuracy of the height of the drive module 1 is ensured.

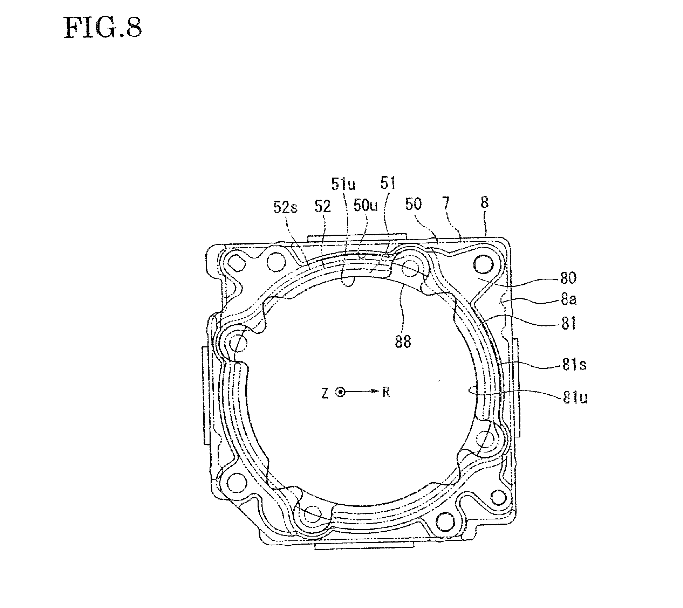

Fig. 8 is a plan view showing a state in which the intermediate member 80 and the module lower panel 8 are placed one on top of another. In Fig. 8, the outline of the lower leaf spring 7 is indicated by a double-dashed chain line.

An inner diameter 81 u of the ring portion 81 of the intermediate member 80 is formed to be equal to an inner diameter 51u of the ring portion 51 of the lower leaf spring 7 and an inner diameter of the opening portion 88 of the module lower panel 8. An outer diameter 81 s of the ring portion 81 of the intermediate member 80 is formed to be equal to or larger than an outer diameter 52s of the spring portion 52 of the lower leaf spring 7. Accordingly, even when an impact force in the Z direction acts on the drive module, and the spring portion 52 of the lower leaf spring 7 is displaced in the Z direction, the spring portion 52 can be collided with the intermediate member 80, whereby the spring portion 52 can be prevented from colliding with the module lower panel 8. Therefore, since there is also no probability that the intermediate member 80 is shaved by the lower leaf spring 7, generation of shavings can be restrained. In particular, in this embodiment, since the lower leaf spring 7 and the intermediate member 80 are formed of the same metallic material, even when the lower leaf spring 7 collides with the intermediate member 80, the intermediate member 80 is not shaved by the lower leaf spring 7.

The outer diameter 81 s of the ring portion 81 of the intermediate member 80 is preferably formed to be equal to or larger than an inner diameter 50u of the frame body 50 of the lower leaf spring 7. Accordingly, even when an impact force in the R direction acts on the drive module, and the spring portion 52 of the lower leaf spring 7 is displaced in the R direction, the spring portion 52 can be collided with the intermediate member 80, whereby the spring portion 52 can be prevented from colliding with the module lower panel 8. In particular, in this embodiment, since the thickness of the intermediate member 80 is larger than the thickness of the lower leaf spring 7, the probability that the ring portion 51 of the lower leaf spring 7 abuts against the intermediate member 80 is increased, and the probability that the ring portion 51 of the lower leaf spring 7 abuts against the module lower panel 8 is lowered.

The power feeding member 9 includes a pair of electrodes 9a and 9b formed of metallic panels. The electrodes 9a and 9b each include a substantially L-shaped wiring portion 9B extending along the outline of the module lower panel 8, the terminal portions 9C projecting downward of the module lower panel 8 from the end portion of the wiring portion 9B, and a conductive connecting portion 9D electrically connected to the terminal portion 15a of the wire holding member 15A. As an electrically connecting device between the terminal portion 15a of the wire holding member 15A and the conductive connecting portion 9D, soldering or bonding with conductive adhesive agent may be employed.

Then, the each wiring portion 9B is formed with a through hole 9A. The through holes 9A are configured to allow insertion of the two lower fixing pins 14B adjacent along the outline of the module lower panel 8 from among the lower fixing pins 14B of the module frame 5 projecting downward from a lower surface of the module lower panel 8 respectively therethrough.

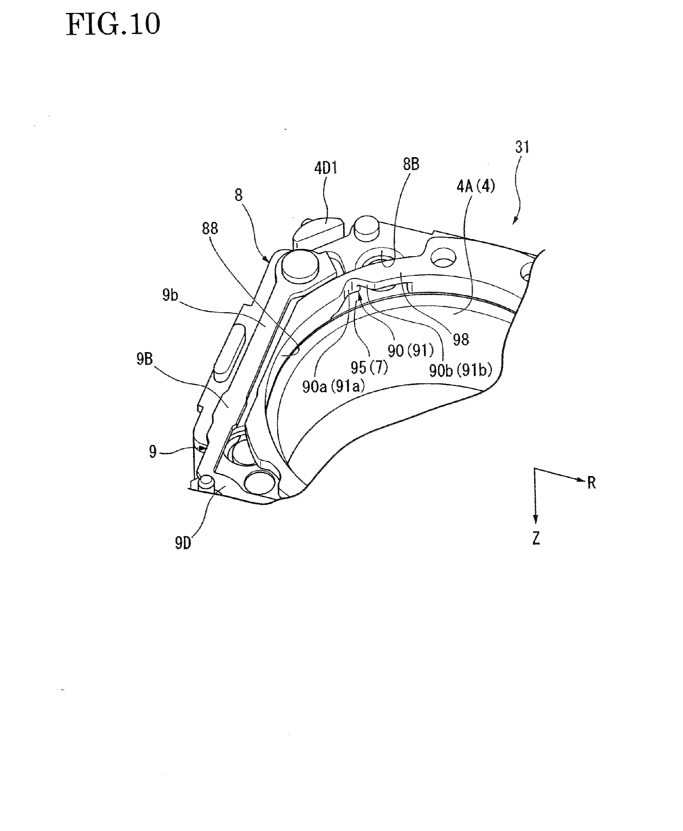

The module lower panel 8 and the intermediate member 80 described above are formed with a plurality of notched portions (hole portions) 90 and 91 which expose the inner peripheral portion of the lower leaf spring 7 when viewing the drive unit 31 from below. Specifically, the notched portions 90 and 91 are formed by being notched outward from the inner peripheral edges of the module lower panel 8 and the intermediate member 80, and are formed at four positions along the circumferential direction so as to match the diagonal lines of the module lower panel 8. The notched portions 90 and 91 are formed into a substantially L-shape including arcuate portions 90a and 91 a formed into an arcuate shape having a radius in the R direction and opened portions 90b and 91 b extending like a skirt from both ends in the circumferential direction of the arcuate portions 90a and 91 a, respectively. In other words, the opened portions 90b and 91 b of the notched portions 90 and 91 are formed by notching parts of the inner peripheral edges of the module lower panel 8 and the intermediate member 80, and are opened toward the opening portion 88 of the module lower panel 8. In this case, the opened portions 90b and 91 b are opened by approximately 90 degrees with the diagonal lines of the module lower panel 8 as center axes. The heights of exposed surfaces 95 of the lower leaf spring 7 exposed from the notched portions 90 and 91 (see FIG. 10) can be measured from a back surface of the module lower panel 8 (hereinafter, referred to as "reference plane 98") by a laser displacement gauge, described later.

### (Action of Drive Module)

Subsequently, referring now to Fig. 2, the action of the drive module 1 will be described.

In a state in which no power is supplied to the power feeding member 9, only the urging force from the coil spring 38 is exerted on the lens frame 4. At this time, the movement of the lens frame 4 in the -Z direction is restricted by the module lower panel 8.

When the power for standby is supplied to the power feeding member 9, heat is generated in the SMA wire 10 to a predetermined temperature and hence the SMA wire 10 contracts. Accordingly, the lens frame 4 moves in the +Z direction, and stops at a predetermined position (standby position) where a tensile force of the SMA wire 10 and the urging force of the coil spring 38 are balanced.

When the power for driving is supplied to the power feeding member 9, heat is generated in the SMA wire 10 according electric energy thereof, and the SMA wire 10 contracts. Accordingly, the lens frame 4 can be moved in the +Z direction to a position where the tensile force of the SMA wire 10 and the urging force of the coil spring 38 are balanced.

In other words, when the power is supplied to the power feeding member 9, a current flows through the SMA wire 10 and hence Joule heat is generated, so that the temperature of the SMA wire 10 is increased. Then, when the temperature of the SMA wire 10 exceeds a transformation starting temperature, the SMA wire 10 contracts to a length corresponding to the temperature thereof. Since the SMA wire 10 is fixed at both ends thereof to the module frame 5 via the wire holding members 15A and 15B, and is engaged at the midsection with the guide projection 4D, the generating force (driving force) is exerted to the guide projection 4D by the contraction, so that the guide projection 4D can be moved upward (in the direction of the arrow +Z in Fig. 4 and Fig. 5) along the direction of the axial line M.

When the lens frame 4 is moved, the coil spring 38 is deformed, and an elastic restoring force according to the amount of deformation is exerted to the lens frame 4. The movement of the lens frame 4 is stopped at a position where the elastic restoring force is balanced with the tensile force of the SMA wire 10. Then, by adjusting the amount of power supply to the power feeding member 9 to control the heat value of the SMA wire 10, the lens frame 4 is moved in the ±Z direction, and is stopped at a predetermined position.

### (Method of Measuring Inclination)

Subsequently, a method of measuring inclination of the lower leaf spring 7 (lens frame 4) with respect to the module lower panel 8 of the drive unit 31 will be described.

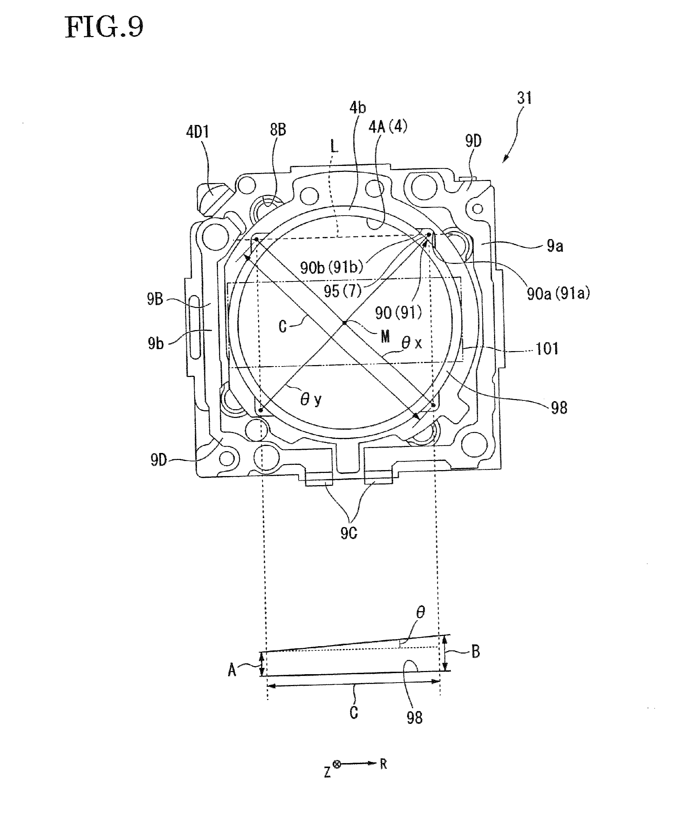

In this embodiment, the heights from the reference plane 98 of the module lower panel 8 to the respective exposed surfaces 95 of the lower leaf spring 7 are measured using the laser displacement gauge, and the inclination is calculated on the basis of the respective heights and the distance between the measured points (exposed surfaces 95). The laser displacement gauge is an instrument for measuring the height (step) from the reference plane (the reference plane 98 of the module lower panel 8) to an object (the exposed surfaces 95 of the lower leaf spring 7) on the basis of a trigonometrical survey system. Specifically, when the reference plane 98 and the exposed surfaces 95 are irradiated with a laser light emitted from a light-emitting element of the laser displacement gauge, part of the reflected light component diffused and reflected from the reference plane 98 and the exposed surfaces 95 is received from a detecting element 101 such as a CCD (see FIG. 9). Then, two output signals according to the position of light spots on the reference plane 98 and the exposed surfaces 95 are issued from the detecting element 101, and the heights from the reference plane 98 to the exposed surfaces 95 are detected on the basis of these two output signals. The light-emitting element of the laser displacement gauge in this embodiment is a line laser which irradiates a band-shaped laser light L (see Fig. 9). Then, the detecting element 101 configured to receive the reflected light (diffused light) of the laser light L is arranged on one side orthogonal to the longitudinal direction (width of the band) of the laser light L.

In this embodiment, as shown in Fig. 9, the drive unit 31 is assembled first, and then the alignment with the laser displacement gauge is performed in a state in which the reference plane 98 of the module lower panel 8 is directed upward. Specifically, the longitudinal direction of the laser light L (that is, the band) is aligned in parallel to the direction of tangent line of a circle around the axial line M as the center, and the drive unit 31 is aligned so that the detecting element 101 is positioned inside (axial line M side) of the lens frame 4 with respect to the laser light L. Then, in this state, the laser light L is directed toward the drive unit 31 from above the drive unit 31. In this case, the laser light L is irradiated so that the exposed surfaces 95 adjacent to each other in the circumferential direction are irradiated. Then, part of the reflected light component diffused and reflected from the reference plane 98 and the respective exposed surfaces 95 is received by the detecting element 101 of the laser displacement gauge. Accordingly, the two output signals according to the positions of the light spots on the reference plane 98 and the exposed surfaces 95 are issued, and the heights from the reference plane 98 to the exposed surfaces 95 can be measured on the basis of these output signals.

In this manner , in this embodiment, by irradiating the band-shaped laser light L, the reference plane 98 and the exposed surfaces 95 can be irradiated with the laser light L at once. Therefore, the heights of the measuring points can be measured by one shot of laser irradiation. In addition, in this embodiment, since the adjacent exposed surfaces 95 (see broken line L in Fig. 9) are irradiated with the laser light L at once, the heights of a plurality (two) of measuring points can be measured at once. Therefore, the number of times of irradiation of the laser is reduced, and the production efficiency can be improved in comparison with the case where the heights are measured for each of the measuring points.

When measuring the heights of the exposed surfaces 95 using the laser displacement gauge, the reflected light diffused and reflected from the exposed surfaces 95 may be blocked by peripheral walls which surround the notched portions 90 and 91.

In contrast, since the notched portions 90 and 91 in this embodiment have the opened portions 90b and 91 b opening toward the opening portion 88 of the module lower panel 8, part of the reflected light diffused and reflected from the exposed surfaces 95 pass the opened portions 90b and 91 b. Accordingly, the light intensity of the reflected light can be increased in comparison with a case where a circular hole is used instead of the notched portions 90 and 91. In addition, in this embodiment, the detecting element 101 of the laser displacement gauge is arranged inside the lens frame 4 with respect to the laser light L, that is, on the side of the opened portions 90b and 91 b, so that the reflected light passing the opened portions 90b and 91 b can be efficiently received. Accordingly, the light intensity of the reflected light that can be received by the detecting element 101 of the laser displacement gauge is increased, so that the height from the reference plane 98 to the exposed surfaces 95 can be measured with higher degree of accuracy.

Subsequently, the heights from the reference plane 98 to the remaining two exposed surfaces 95 are measured by rotating the drive unit 31 about the axial line M, and irradiating the remaining two exposed surface 95 with the laser light L.

Subsequently, the inclination of the lower leaf spring 7 (lens frame 4) is calculated on the basis of the heights from the reference plane 98 to the respective exposed surfaces 95 measured using the laser displacement gauge. Specifically, an angle of inclination θ of the lower leaf spring 7 can be obtained from an expression, θ = arctan {(B-A)/C}, where A and B are heights of the exposed surfaces 95 opposing on the diagonal line (R direction) of the module lower panel 8 (see Fig. 9), C is a distance between the exposed surfaces 95 (distance between the measuring positions) (see Fig. 9). In this embodiment, two angles of inclinations θx and θy are measured using two points each opposing on the diagonal lines of the module lower panel 8 from among the four exposed surfaces 95. In this case, the lower leaf spring 7 is connected to a lower surface of the lens frame 4, the inclination of the lower leaf spring 7 and the inclination of the lens frame 4 are equal.

With the procedure as described above, the inclination of the lower leaf spring 7 (lens frame 4) with respect to the module lower panel 8 can be measured.

Then, an angle of inclination θz of the entire surface of the lower leaf spring 7 (lens frame 4) with respect to the module lower panel 8 is calculated from the above-described two angles of inclination θx and θy. The value of θz can be obtained from an expression, θz = √(θx^2 + θy^2). Then whether or not the calculated angle of inclination falls within the standard is inspected, and only those within the standard are distributed to the market as products.

In this manner, this embodiment employs a configuration in which the notched portions 90 and 91 are formed on the module lower panel 8 and the intermediate member 80, and the lower leaf spring 7 is exposed when viewing the drive unit 31 from below.

In this configuration, when measuring the inclination of the lens frame 4 using, for example, the laser displacement gauge of trigonometrical survey system, the exposed surfaces 95 of the lower leaf spring 7 connected to the lens frame 4 can be used as measuring surface for measuring the inclination. Therefore, since the inclination of the lens frame 4 can be detected with high degree of accuracy on the basis of the heights (positions) of the exposed surfaces 95 of the lower leaf spring 7 with respect to the reference plane 98 of the module lower panel 8, non-defective products and defective products can be determined accurately. Therefore, a high-quality drive module 1 with less possibility of one-side blur can be provided.

In addition, since the inclination can be measured without assembling the artificial lens or the lens unit to a lens frame 200 as in the case of the method of measuring the inclination using the regular reflection of the laser light in the related art, generation of the shavings is restrained. Furthermore, since whether or not the lens unit is defective can be determined in an early stage before assembly to the lens frame 4, lowering of the production efficiency can be restrained. In addition, the defective product does not have to be discarded as an entire lens unit, the cost of defective products can be reduced. Furthermore, since the measured inclination does not include the inclination of the artificial lens or the lens unit in itself, measurement with higher degree of accuracy is achieved.

Furthermore, in this embodiment, since the notched portions 90 and 91 are formed at four positions of the restricting member and the intermediate member 80 along the circumferential direction, the angles of inclination θx and θy at two or more positions can be calculated in the circumferential direction of the lower leaf spring 7. In addition, since the angle of inclination θz of the entire surface of the lower leaf spring 7 on the basis of the calculated plurality of angles of inclination θx and θy can be measured, measurement with higher degree of accuracy is achieved.

In the structure configured to drive the lens frame 4 with a single SMA wire 10 as in this embodiment, the structure is simple and the control is also simple. However, the lens frame 4 is supported in a cantilevered state. In this case, inclination is generally liable to be increased between a suspending side (the side where the guide projection 4D is formed) and the opposite side thereof although it depends on the elastic coefficient of the SMA wire 10.

In contrast, according to this embodiment, a maximum value of inclination of the lower leaf spring 7 (lens frame 4) can be detected by forming the notched portions 90 and 91 on the diagonal lines of the guide projection 4D of the lens frame 4 (on a line of intersection between a plane including the guide projection 4D and the axial line M and the module lower panel 8). Accordingly, whether or not the angle of inclination of the lower leaf spring 7 (lens frame 4) falls within the standard can be determined accurately, and hence further reliable product can be provided.

### (Electronic Apparatus)

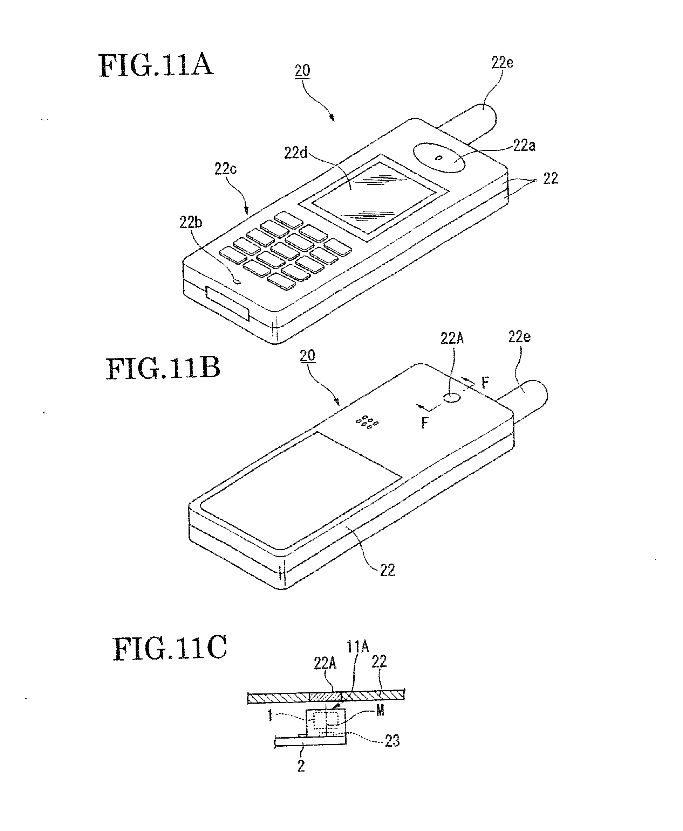

Subsequently, an embodiment of the electronic apparatus according to the invention will be described. In this embodiment, a cellular phone with camera having the drive module 1 in the embodiment described above will be described as an example of the electronic apparatus. Figs. 11A to 11C are explanatory drawings of a cellular phone 20 with camera. Fig. 11A is an appearance perspective view on the front side of the cellular phone with camera 20. Fig. 11B is an appearance perspective view on a back side of the cellular phone with camera 20. Fig. 11C is a cross-sectional view taken along the line F-F in Fig. 11B.

As shown in Fig. 11A, the cellular phone with camera 20 in this embodiment includes a telephone receiver 22a, a telephone transmitter 22b, an operating unit 22c, a liquid crystal display 22d, an antenna unit 22e, and electronic parts of the known cellular phone such as a control circuit unit, not shown, outside or inside a cover 22.

As shown in Fig. 11B, the cover 22 is formed with a window 22A which allows transmission of outside light on the back surface side opposite the side where the liquid crystal display 22d is provided. As shown in Fig. 11C, the opening 11A of the drive module 1 faces the window 22A of the cover 22, and the drive module 1 is installed so that the axial line M extends in the direction of a normal line of the window 22A. The drive module 1 is mechanically and electrically connected to a substrate 2. The substrate 2 is connected to the control circuit unit, not shown, so that the power can be supplied to the drive module 1.

In this configuration, the light transmitted through the window 22A is focused by the lens unit, not shown, of the drive module 1 so as to form an image on an image pickup element 23. Then, by supplying suitable power from the control circuit unit to the drive module 1, the lens unit is driven in the direction of the axial line M to perform focus position adjustment, so that shooting can be performed.

In particular, since the cellular phone with camera 20 in this embodiment includes the high-quality drive module 1 with less inclination of the lens frame 4, the shooting of high-quality images is enabled, so that the cellular phone with camera 20 superior in reliability of operation can be provided.

The technical scope of the invention is not limited to the embodiments shown above, and various modifications may be made without departing the scope of the invention.

For example, in the embodiment described above, the lens frame 4 is driven in the direction of the axial line M by exerting the generating force on the guide projection 4D using the SMA wire 10. However, the invention is not limited thereto, and the lens frame 4 may be driven using a solenoid or a piezoelectric actuator or the like as an actuator.

In the embodiment described above, a case where the upper fixing pins 13A and 14A and the lower fixing pins 13B and 14B are inserted into the upper leaf spring 6 and the lower leaf spring 7 as the connecting members, and the distal end portions of the fixing pins are thermally caulked has been described. However, the method of fixing the connecting member is not limited thereto. For example, fixation may be achieved by ultrasonic caulking, or the connecting member may be adhered to the lens frame 4 and the module frame 5. In this case, since a large adhered surface is secured, a high strength is achieved even with an adhesive agent.

In the embodiment described above, the module frame 5 is described as the member having the substantially rectangular shape as a whole. However, the shape is not limited to the substantially rectangular shape, and may be a polygonal shape.

In the embodiment described above, an example in which the drive module 1 is used as the focus position adjustment mechanism for the lens unit has been described. However, the application of the drive module 1 is not limited thereto, and the drive module 1 may be used in other portions as the suitable actuator for moving the driven member to a target position. For example, the drive module 1 can be used as the suitable actuator by screwing a rod member or the like instead of the lens unit or changing the lens frame 4 into other shapes. In other words, the drive member is not limited to the cylindrical member, but may be a column- or other-shaped member.

In the embodiment described above, an example of the cellular phone with camera 20 has been described as the electronic apparatus employing the drive module 1. However, the type of the electronic apparatus is not limited thereto. For example, the drive module 1 may be used for an optical apparatus such as a digital camera or a camera built in a personal computer, or can be used as an actuator for moving the driven member to a target position in the electronic apparatus such as an information reading memory or a printer.

In the embodiment, a case where a two-dimensional type laser displacement gauge which irradiates the band-shaped laser light L is used to measure the heights of the plurality of (two) measuring points at once has been described. However, the heights may be measured one by one.

In addition, in the embodiment described above, a case where the inclination is measured by the two-dimensional type laser displacement gauge which irradiates the band-shaped laser light L has been described. However, the invention is not limited thereto, and a spot-type laser displacement gauge for focusing the laser light to one spot may also be used. However, as in the embodiment, using the two-dimensional type laser displacement gauge, operations such as scanning of laser are not necessary, and displacement at a plurality of positions can be measured at once. Therefore, improvement of production efficiency is achieved.

Also, it is possible to measure the inclination using various types of non-contact displacement gauges such as an eddy-current type, an electrostatic type, or an ultrasonic type.

In addition, in the embodiment described above, the heights from the reference plane 98 to the exposed surfaces 95 are simply measured with one exposed surface 95 using the laser displacement gauge of trigonometrical survey system and, on the basis of the heights measured at the respective exposed surfaces 95, the angle of inclination of the lower leaf spring 7 (lens frame 4) with respect to the module lower panel 8 is calculated.

However, the invention is not limited thereto, and measurement may be made on the basis of absolute positions of the exposed surfaces 95 with respect to the laser displacement gauge (measuring device), or inclination may be measured with a single exposed surface 95 by receiving the reflected light regularly reflected from the exposed surface 95.

In the embodiment described above, a configuration in which the intermediate member 80 is provided between the module lower panel 8 and the lower leaf spring 7 has been described. However, a configuration without the intermediate member 80 is also applicable.

In addition, the number of notched portions 90 and 91 is not limited to four, and may be three or less, or five or more. In this case, it is preferable to arrange the notches at least on the diagonal line of the lens frame 4 as described above.

Also, when the notched portions 90 and 91 are provided only at two positions, it is preferable to arrange the notches on the diagonal line of the lens frame 4. Accordingly, a maximum value of the inclination of the lower leaf spring 7 (lens frame 4) can be detected.

Also, in this embodiment, a configuration in which the notched portions 90 and 91 include the opened portions 90b and 91 b opened toward the opening portion 88 of the module lower panel 8 has been described. However, design may be modified as needed as long as the lower leaf spring 7 has the exposing exposed surface 95. For example, it may be a simple through hole which penetrates through the module lower panel 8 and the intermediate member 80 in the thickness direction.

Furthermore, in the embodiment described above, a case where the exposed surfaces 95 of the lower leaf spring 7 are used as the surfaces for measuring the inclination is described. However, the invention is not limited thereto, and the lens frame 4 may be exposed to set the lens frame 4 in itself as the inclination measuring surface. From among the respective components connected to the lens frame 4, components which can be exposed from the module lower panel 8 may be set as the measuring surface for the measurement of inclination by forming the notched portions 90 and 91 on the module lower panel 8.

Also, a configuration in which a connecting member for measuring the inclination is provided in the lens frame 4 as a separate member, and the connecting member is exposed from the notched portions 90 and 91 is also applicable.

## Claims

1. A drive module (1) comprising:
a driven member (4) movable in a first direction (2);
a supporting member (5) configured to store the driven member inside thereof;
a connecting member (7) connected to end surfaces of the driven member and the supporting member in the first direction; and
a restricting member (8) arranged on the opposite side of the driven member with respect to the connecting member, and configured to restrict the movement of the driven member in a direction opposite from the first direction, wherein
the restricting member is formed with an exposing portion (90) exposing the driven member or the connecting member when viewing the restricting member in the first direction.

2. The drive module according to Claim 1, wherein three or more said exposing portions are formed on the restricting member.

3. The drive module according to Claim 1 or Claim 2, comprising:
a projecting portion (4D) projecting outward from an outer wall surface of the driven member; and
a shape memory alloy wire (10) fixed at both end portions to the supporting member and engaged at a midsection with the projecting portion, and configured to move the driven member along the first direction by being expanded or contracted due to heat generation when energized, wherein
the exposing portion is arranged on a line of intersection between the restricting member and a plane including the projecting portion and the first direction.

4. The drive module according to any one of the preceding claims, wherein the restricting member is formed with a center hole penetrating along the first direction, and
the exposing portion is formed by notching part of a periphery of the center hole.

5. The drive module according to any one of claims 1 to 3, wherein the exposing portion is a hole.

6. An electronic apparatus comprising the drive module according to any one of the preceding claims.
